# EUROPEAN PATENT APPLICATION

(11) **EP 3 462 296 A1**
(43) Date of publication of application: **03.04.2019**
(21) Application number: 17193586.9
(22) Date of filing: 27.09.2017
(51) Int. Cl.: G06F 3/0488, G06F 3/0482

(54) **USER INTERFACE ELEMENTS FOR COMPACT MENU**

(71) Applicant: Fomtech Limited, London SW3 6RD (GB)
(72) Inventor: de Wever, Martijn, London, W8 6JN (GB); Imamovich, Sasha, London, SW5 9TE (GB)
(74) Representative: Carpmaels & Ransford LLP

(57) **Abstract**

A system for generating user interface elements comprises a communication interface, an element generation module, a display module and a receiver module. The communication interface is arranged to receive input data comprising at least one class associated with a plurality of characteristics. The element generation module is arranged to generate a first set of interactive user interface elements, each associated with a characteristic of a first set of the characteristics. The display module is arranged to display the first set of interactive user interface elements in a first arcuate shape. The receiver module arranged to receive a user input in respect of a first user interface element in the first set. The display module is arranged to display a second set of interactive user interface elements each associated with a second set of the characteristics and the characteristic of the first user interface element, in response to the user input in respect of the first user interface element.

## Description

### Technical Field

This disclosure relates to a system, a computer-implemented method and a computer program for generating user interface (UI) elements.

### Background

There are many known techniques for displaying information to a user. In one example, "cascading" menus of information can be used. An example of a cascading menu is illustrated in granted European patent 0 717 344.

In a cascading menu, a number of different selectable options are displayed to a user, and the user can provide an input in order to select one of the options. Once an option has been selected, another set of selectable options are displayed, each of which can be selected by the user in order to display a further set of options, and so on.

A conventional cascading menu may be appropriate for use when there is a limited number of options for the user to choose from or when a large amount of display area is available. However, where there is a large number of options available for selection, and if each option has a large number of sub-options, conventional cascading menus may be inappropriate. In these scenarios, display area can be consumed by the cascading of different options. In addition, it may be difficult for the user to select options, particularly if the size of the user interface elements have been reduced in order to conserve display area.

These conventional cascading menus may be unsuitable when a small display area is available, which is particularly relevant in modern environments where users tend to consume information using smaller screens, such as those used in smart-phones. In these devices, users may find it difficult to manipulate the touch-screen in order to quickly and easily select the desired options in a particular order.

Thus, there exists a need for a technique that uses display resources more efficiently so that a user can visualise large amounts of information and navigate through selectable options for interrogating the information.

### Summary

This summary is provided to introduce a selection of concepts in a simplified form that are further described below in the detailed description section. This summary is not intended to identify key features or essential features of the claimed subject matter, nor is it intended to be used as an aid in determining the scope of the claimed subject matter.

In one aspect of the invention, there is provided a system for generating user interface elements, the system comprising: a communication interface arranged to receive input data comprising at least one class associated with a plurality of characteristics; an element generation module arranged to generate a first set of interactive user interface elements, each associated with a characteristic of a first set of the characteristics; a display module arranged to display the first set of interactive user interface elements in a first arcuate shape; and a receiver module arranged to receive a user input in respect of a first user interface element in the first set and wherein the display module is arranged to display a second set of interactive user interface elements each associated with a second set of the characteristics and the characteristic of the first user interface element, in response to the user input in respect of the first user interface element.

In another aspect of the invention, there is provided a computer-implemented method of generating user interface elements, the method comprising: receiving input data comprising at least one class associated with a plurality of characteristics; generating a first set of interactive user interface elements, each associated with a characteristic of a first set of the characteristics; displaying the first set of interactive user interface elements in a first arcuate shape; receiving a user input in respect of a first user interface element in the first set and, in response, displaying a second set of interactive user interface elements each associated with a second set of the characteristics and the characteristic of the first user interface element.

In another aspect of the invention, there is provided a computer program comprising executable code portions which when run on a computer cause the computer to perform the methods described herein.

In another aspect of the invention, there is provided a computer-readable data carrier having stored thereon the computer program described herein.

### Brief Description of the Drawings

Various embodiments of the invention will be described below by way of example only, with reference to the following drawings, in which:
Figure 1 is a schematic of a system for generating user interface (UI) elements;
Figure 2 illustrates an example of the structure of an input data set;
Figure 3 is a flow chart illustrating a method for generating UI elements;
Figure 4 is a schematic of some of the features of the system of Figure 1;
Figure 5 illustrates an example of UI elements each associated with a class from the input data;
Figures 6A-6H illustrate various views of a compact menu generating using the systems and methods described herein.

### Detailed Description

Described herein are processing systems and methods that use a first set of interactive user interface (UI) elements displayed in a first arcuate shape, and a second set UI elements displayed in response a user selecting a UI from the first set. This allows the elements to be displayed in a more compact arrangement which makes more efficient use of display resources.

The user can make a selection more easily using the arcuate set of UI elements. This is particularly advantageous when a touch-screen with a small display area is used. For instance, in a situation where the user holds their device with one hand, it is possible for the user to make a selection with a slight rotation of their thumb around the arcuate shape in order make a selection. This is a simpler movement than would otherwise be required if a conventional cascading menu were used.

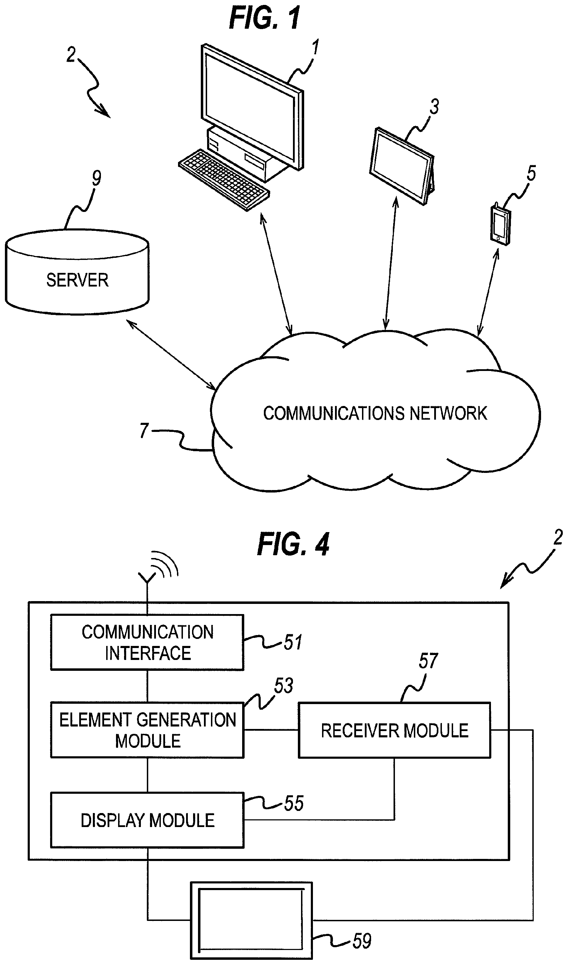

Figure 1 illustrates the general architecture of a system 2 for generating UI elements, such that a compact menu can be displayed to a user. The system may comprise any number of computing devices, such as a desktop computer 1, a "tablet" computer 3, and a smartphone 5. The computing devices 1, 3 and 5 are arranged to communicate with one another and with a server 9, via a communications network 7.

The communications network 7, in this example, is the Internet 7. However, it will be appreciated that any suitable form of communications network could be used.

The computing devices 1, 3, 5 are web-enabled by including an embedded browser or "app" or similar. In addition, each device 1, 3, 5 comprises a display, a user interface device, a processor and memory. The server 9 comprises a memory and a processor.

The devices 1, 3, 5 and the server 9 can be arranged to communicate data between one another via any suitable communications protocol or connection. For instance, the devices 1, 3, 5 and server 9 may communicate with one another via a wired and/or a wireless connection.

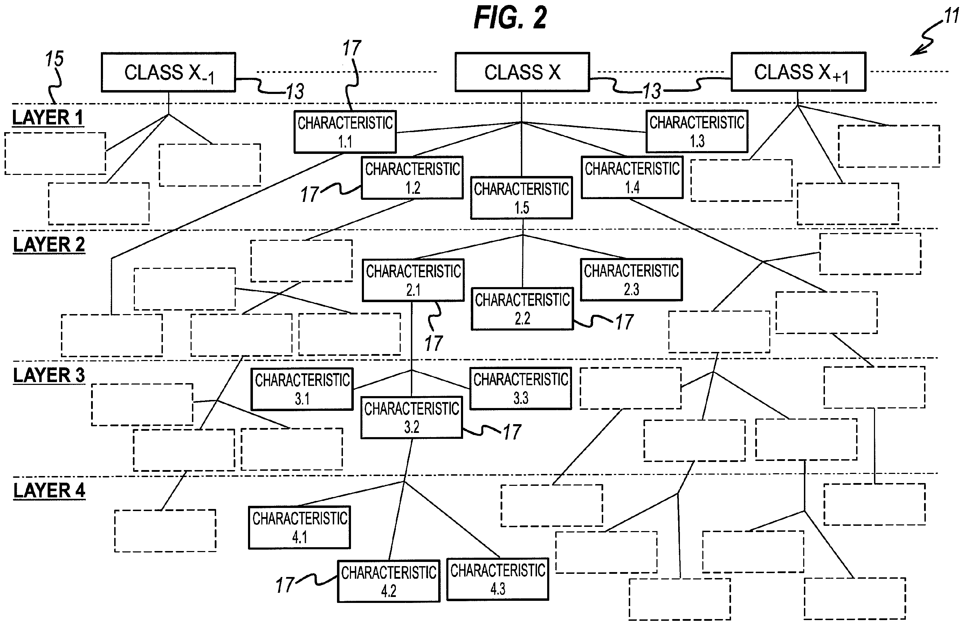

In the following example, each of the devices 1, 3, 5 may wish to view data stored at the server 9, such as the data illustrated in Figure 2. This example data set comprises a large number of "classes" 13 denoted by the labels "class X-1", "class X" and "class X+1". The term class is used herein to refer to a particular entity, type or category of data. For instance, each class might signify a person, a particular location, such as country or town, or an institution, such as a company or a school etc.

As illustrated in Figure 2, the data is arranged in a hierarchical structure comprising a number of different "layers" 15. Although four layers 15 are shown in Figure 2, it will be appreciated that any number of layers 15 could be comprised in the data structure.

In each layer of data there are additional entities or "characteristics" 17 that stem from the class and/or a characteristic in the previous layer. For example, "class X" 13 may be a country such as the United Kingdom (UK), and in the first layer 15 the characteristics 17 associated with the UK may be "Gross Domestic Product", "Population", "Land Mass", "Constituent Parts" and "Spoken Languages". Each one of these characteristics 17 may be associated with a particular number. For instance, the "Population" characteristic 17 may be associated with the current population of the UK.

In the next layer 15 ("Layer 2") there are additional characteristics 17, each associated with a characteristic 17 in the previous layer 15 ("Layer 1"). To use the "Population" characteristic 17 as an example, the characteristics 17 in Layer 2 associated with "Population" may indicate the population of each constituent part of the UK, such as Scotland, England, Wales and Northern Ireland. Each one of these characteristics may be associated with a data item comprising a number indicating the population of each one of these constituent parts.

As illustrated in the Figure 2, at each layer 15 moving down the hierarchy more detailed information is contained within the characteristics 17 of that layer. Thus, by moving down the hierarchy it is possible focus in on more specific data. On the other hand, moving up the hierarchy allows a broader overview of the class to be obtained.

Using conventional techniques it is a challenge to present data, such as the data described with reference to Figure 2, to a user in an effective manner. In addition, conventional techniques are not capable of allowing the user to navigate through the various layer 15 in a simple and effective manner.

A computer-implemented method for operating the system shown in Figure 1 will now be described using the data illustrated in Figure 2 as an example. This method, which is described below, may be carried out on at least one of the devices 1, 3, 5. The method may also use at least one server 9 and the communications network 7.

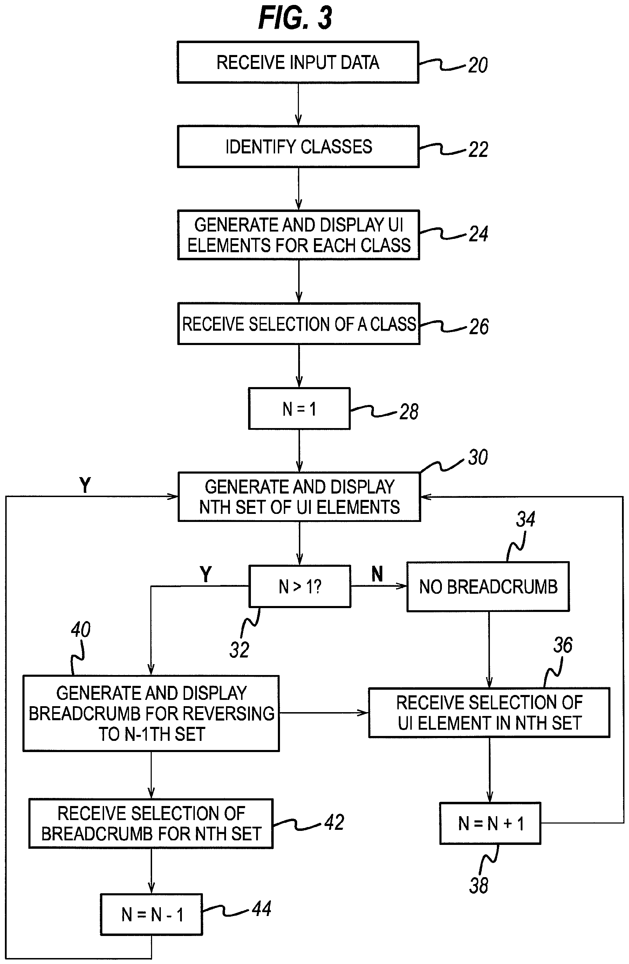

Figure 3 shows a flow chart illustrating, at an overview level, a method of generating UI elements. These elements can be displayed to a user in the form of a compact menu that allows the user to navigate through data, such as the data described with reference to Figure 2. The arrangement of the compact menu allows display screen resources to be used efficiently and allows a user to interact with the menu in a simple manner. Figure 4 illustrates, in schematic form, some of the features of the system 2.

In step 20, input data is received at a communication interface 51 in the system 2. The input data may be the data described with reference to Figure 2. However, it will be appreciated that any other suitable form of data could be used.

In step 22, an element generation module 53 identifies the classes in the data, such as "class X-1", "class X" and "class X+1", which in this example indicate different countries. Then, in step 24, the element generation module 53 generates a user interface element for each class. These UI elements are displayed by a display module 55, via a display screen such as a touch screen display 59.

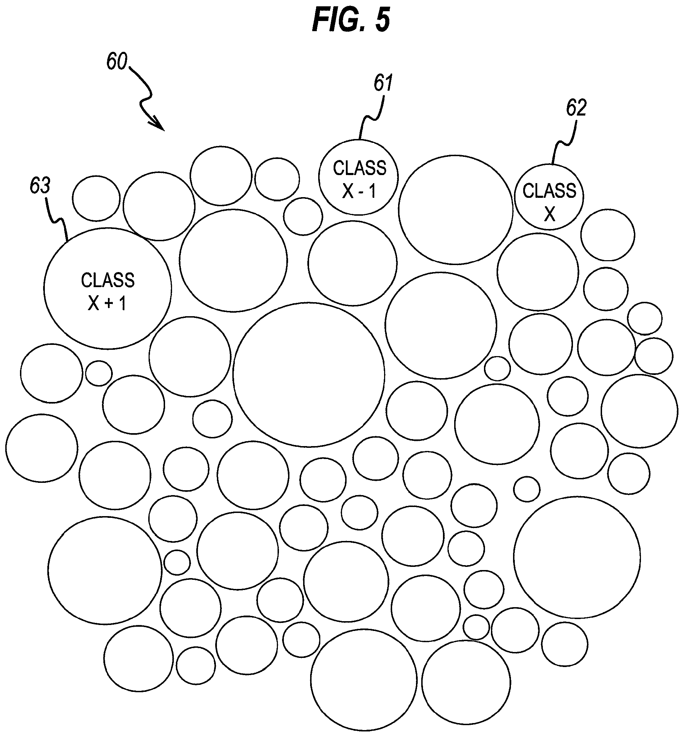

An example of the UI elements 60 that are generated and displayed for each class is illustrated in Figure 5. In this case, each one of the UI elements 60 is circular and is associated with one of the classes in the input data. For instance, UI element 61 is associated with "class X-1", UI element 62 is associated with "class X" and UI element 63 is associated with "class X+1". Text indicative of the class may be displayed inside each UI element in order to indicate which UI element is associated with which class. The size of each UI element may be indicative of the relative size/weighting score of the class associated with each element, in comparison to other elements. The size/weighting score for each class may be calculated based on the sum of the characteristics associated with a particular class, and a particular weighing may be assigned to each characteristic in order to produce a weighted score. Each UI element can be selected by the user so that more detailed information can be displayed in connection with the class associated with the UI element selected by the user.

In step 26, the user selects a class. In this example, the user selects UI element 62, which is associated with "class X", by using the touch screen 59 to initiate a touch-gesture in the location of the UI element 62. Then, in step 28 a variable "N" is set to equal 1.

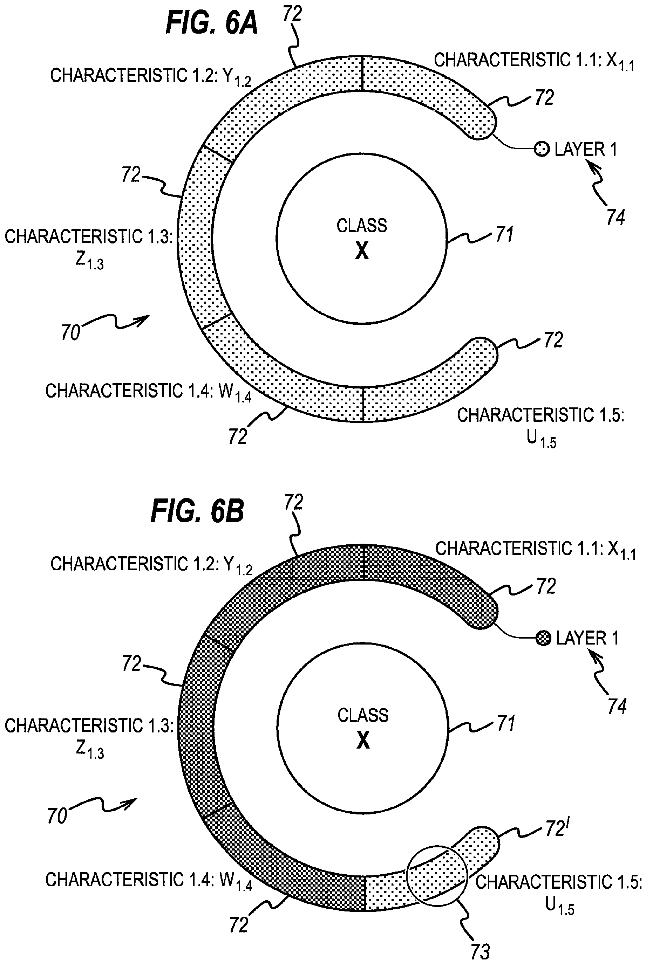

In step 30, the element generation module 53 generates a compact menu. An example of the compact menu 70 is illustrated in Figure 6A. This menu 70 can be used to navigate through the various characteristics associated with the selected class. This compact menu 70 is displayed using the display module 55, via the display screen 59. In step 30, N is equal to 1 and therefore a first set of UI elements 72 is displayed.

Referring to Figure 6A, the compact menu 70 comprises a first set of interactive UI elements 72. Each one of the UI elements 72 in the first set is associated with a characteristic of a first set of characteristics. Each one of these characteristics may have a value, text or character string associated with it, and this information is displayed in proximity to each respect UI element 72. In Figure 6A, the name of the characteristic would appear where the label "Characteristic 1.n" appears, and the value, text or character string would appear where the label "X 1.n" appears. In addition, the first set of characteristics is associated with the class selected by the user.

To carry forward the example used above, the user selects the UI element associated with the "United Kingdom" class. In response, the display module 55 displays a compact menu with a set of five UI elements 72. Each one of these elements is associated with one of the "Gross Domestic Product", "Population", "Land Mass", "Constituent Parts" or "Spoken Languages" characteristics respectively. Labels indicative of these characteristics may be displayed alongside their respective UI elements along with the value associated with the characteristic.

As illustrated in Figure 6A, the interactive elements 72 of the first set are displayed in an arcuate shape, which in this case is a circular shape. The arcuate shape of the UI elements allows the compact menu 70 to use display resources efficiently, since the UI elements can be arranged to occupy a smaller area of the display screen. In addition, the arcuate shape allows the user to select the UI elements more easily, since the user can simply rotate their thumb to select a different element. This is more convenient for the user than engaging in a gesture which may require the use of an additional hand or the use of a scrolling gesture.

The first set of interactive elements 72 are spaced along the first arcuate shape. In this case, the elements 72 are positioned adjacent one another. However, the elements 72 could be positioned with a gap between adjacent elements 72 in order to help to avoid the user from accidently selecting an unintended element. In this example, the first set of interface elements 72 are spaced along the first arcuate shape in a single row of elements.

The UI elements 72 of the first set are arranged in a partial ring, where the ring is unclosed and comprises a gap. In this example, the gap is at least one quarter of the length of the circumference of the ring. This gap provides a space where no UI element is present. In this way, the user is able to position their thumb over this gap when operating the menu in order to help to avoid accidently engaging with a UI element unintentionally.

In addition, the compact menu 70 comprises a labelling element 71, which is indicative of the class associated with the characteristics of the first set of UI elements 72. The compact menu also has a layer element 74, which is indicative of the layer of the characteristics associated with the first set of UI elements 72. To use the example above, the "Layer 1" element would indicate "General Country Characteristics" and the labelling element 71 would indicate "United Kingdom".

In step 32, it is determined whether the variable "N" is greater than 1. In this case, since "N" was set to be equal to 1 in step 28, the method proceeds to step 34 in which it is determined that no "breadcrumb" element is to be displayed. The purpose of the breadcrumb element will be described in greater detail later.

In step 36, a receiver module 57 receives a user input. Referring to Figure 6B, the user input is received in respect of a first element 72' in the first set. In this example, the user input is provided by the user initiating a touch-gesture via the touch screen 59. The location of this touch gesture is illustrated in Figure 6B via the cursor 73 as being in proximity to the first UI element 72'. In this example, the first UI element 72' is associated with the "Population" characteristic. Thus, the user's interaction with this UI element 72' indicates that the user desires to determine more detailed information regarding the population of the United Kingdom.

Although a touch-screen display 59 is used in this example, it will be appreciated that any suitable form of user interface device could be used to receive a user input. For instance, the user input may be received via a "mouse" or a keyboard etc.

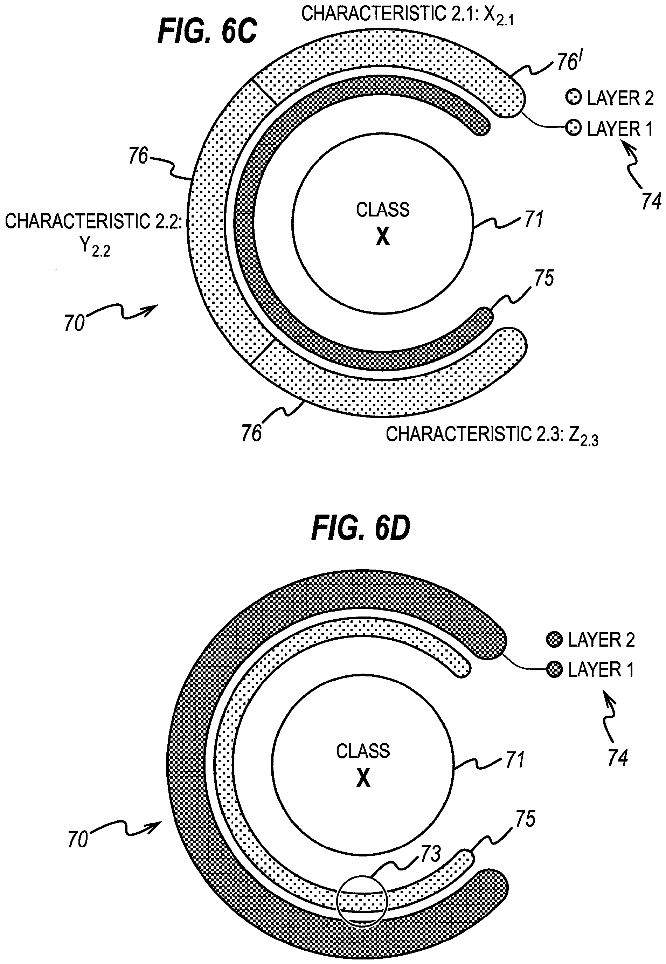

Referring to Figure 6C, in step 38, and in response to the user input, the variable "N" is incremented by 1, such that "N" is equal to 2. Then, the method proceeds to repeat step 30 where it is determined that the Nth (or in this case the second) set of interactive UI elements 76 is to be generated and displayed. Each one of the UI elements 76 in the second set is associated with a second set of characteristics. In addition, each one of the UI elements 76 in the second set is associated with the characteristic of the first element 72' that was selected by the user in step 36 and illustrated in Figure 6B. In this example, the selected characteristic was the "Population" characteristic. Therefore, each of the UI elements 76 in the second set provides further information regarding the "Population" characteristic.

Also, in step 38 an additional layer element 74 is displayed, which indicates that the user is viewing UI elements 76 of the second layer (or "Layer 2") in the data. In this example, the Layer 2 element indicates "Population", whilst the labelling element 71 continues to indicate "United Kingdom". In this way, it is possible for the user to determine that the UI elements 76 of the second set provide further information about the population of the United Kingdom.

Figure 6C illustrates the compact menu 70 that is displayed and generated by the element generation module 53 and the display module 55. The UI elements 76 of the second set are arranged in a similar arcuate shape to that described with reference to Figures 6A and 6B. However, there are three UI elements 76 in the second set, whereas there were five in the first set of UI elements 72. However, this number of UI elements is provided as an example only, and it will be appreciated that any number of UI elements could be generated and displayed in the first or second sets, dependent on the number of relevant characteristics to be displayed to the user.

In step 32, the method determines whether "N" is greater than 1. Referring to Figure 6C, since "N" is equal to 2 the method proceeds to step 40, in which a breadcrumb element 75 is generated and displayed. The breadcrumb element 75 is used so that the user can reverse to the previous set of UI elements. When the compact menu 70 displays the first set of UI elements 72, it is not required to display the breadcrumb element 75 because the UI elements associated with the "top" layer of characteristics is displayed. Thus, there is no previous set of UI elements which can be reverted to.

Figure 6C illustrates the breadcrumb element 75 that is displayed and generated in step 40. The breadcrumb element 75 has a similar arcuate shape to the first arcuate shape of the first set of UI elements 72. However, the breadcrumb element 75 has a shorter width that than the first arcuate shape, and is positioned within the second set of UI elements 76. Thus, the breadcrumb element 75 forms a third arcuate shape within an interior circumference of the second arcuate shape.

After step 40 has been executed, if the user selects the breadcrumb element 75, the method may proceed to step 42. Alternatively, if the user selects a UI element 76 in the second set of elements, the method proceeds to repeat step 36.

In step 42, the user can select the breadcrumb element 75 in order to revert the display back to the previous set of UI elements. The user selecting the breadcrumb element 75 is illustrated in Figure 6D by the position of the cursor 73.

If the user selects the breadcrumb element 75, "N" is reduced by 1 in step 44, and the method proceeds back to step 30. In this step, the first set of UI elements 72 are displayed again to user, as illustrated in Figure 6A. In addition, the second set of UI elements 76 are hidden in response to the user selecting the breadcrumb element.

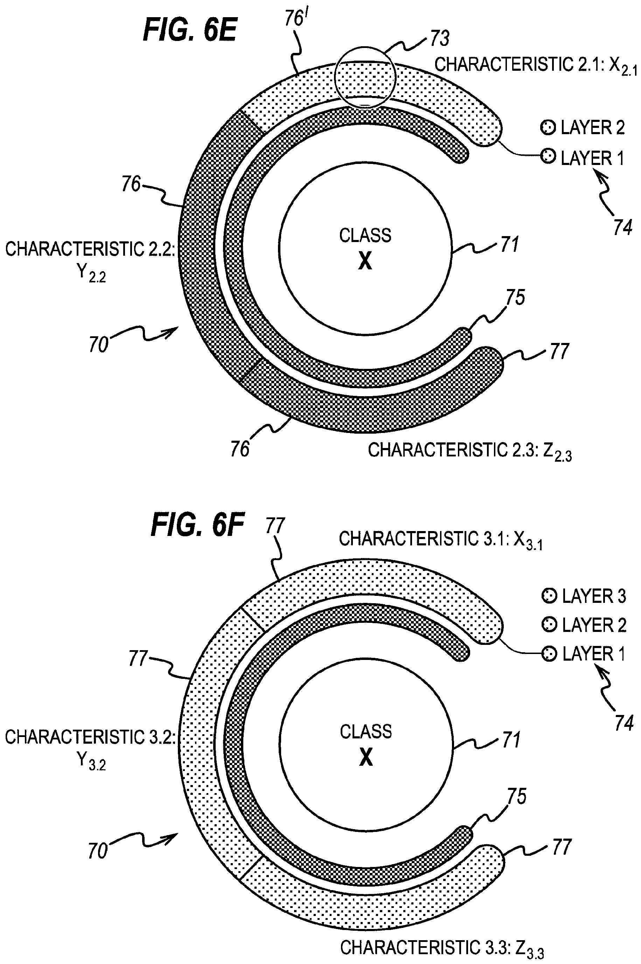

Alternatively, from step 40 the method proceeds to step 36 if the user selects a UI element 76' from the second set of elements 76. This is illustrated in Figure 6E, where the cursor 73 indicates the location of a touch-gesture made by the user in respect of the UI element 76' from the second set of elements. In response to the user selection, steps 38, 30, 32 and 40 are repeated in a similar manner to that described above.

The repetition of these steps cause the menu 70 illustrated in Figure 6F to be displayed. In these steps, the element generator module 53 and the display module 55 are arranged to generate and display a third set of interactive UI elements 77 each associated with a third set of the characteristics. In addition, the UI elements 77 in the third set are associated with the characteristic of the UI element 76' that was selected in step 36. As shown in Figure 6F, the breadcrumb element 75 is displayed. However, in this instance, selection of the breadcrumb element 75 will revert the display back to the menu 70 comprising the second set of elements 76, as illustrated in Figure 6C.

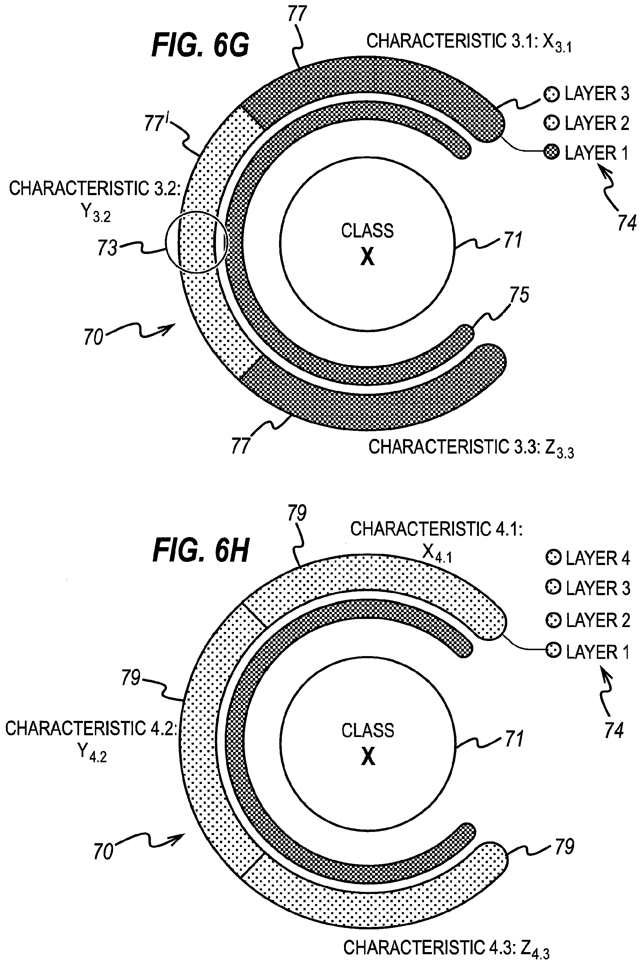

In a similar manner to that described above, step 36 onwards can be executed again in connection with the UI elements 77 of the third set. Referring to Figure 6G, the user selects a UI element 77' from the third set, which causes a fourth set of UI elements 79 to be displayed, which is shown in Figure 6H. The breadcrumb element 75 in this display be used to revert back to the display illustrated in Figure 6F. In addition, the user can initiate a touch-gesture in the location of a layer element 74 in order to revert back to the set of UI elements corresponding with the layer element 74 selected. For instance, the user can select the "Layer 1" element to revert back to the first set of UI elements 72 illustrated in Figure 6A. In another example, the user can select the "Layer 2" element to revere back to the second set of UI elements 76 illustrated in Figure 6C. This avoids the need for the user to select the breadcrumb element 75 multiple times in order to revert back more than one step.

The display screen 59 in the system 2 may be comprised within a desktop computer 1, a smartphone 5 or a tablet 3. The display screen may have a diagonal length of less than 30.5 cm (12 inches) or less than 12.3cm (6 inches).

The modules of the system 2 described above with reference to Figures 1 and 4, may be distributed throughout the system at any number of different devices. For instance, the smartphone 5, tablet 3 or desktop computer 1 may comprise the communication interface 51, the element generation module 53, the display module 55 and the receiver module 57.

In another example, the server 9 comprises the communication interface 51 and the element generation module 53; and a client-side device 1, 3, 5 comprises the display module 55 and the receiver module 57. In this way it is possible to off-load some of the more computationally intensive actions to the server 9, rather than the client-side device 1, 3, 5.

The term "comprising" encompasses "including" as well as "consisting" e.g. a composition "comprising" X may consist exclusively of X or may include something additional e.g. X + Y.

Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

It will be appreciated that the modules described herein may be implemented in hardware or in software. Furthermore, the modules may be implemented at various locations throughout the system.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought. Any of the module described above may be implemented in hardware or software.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### EMBODIMENTS

1. A system for generating user interface elements, the system comprising:
   a communication interface arranged to receive input data comprising at least one class associated with a plurality of characteristics;
   an element generation module arranged to generate a first set of interactive user interface elements, each associated with a characteristic of a first set of the characteristics;
   a display module arranged to display the first set of interactive user interface elements in a first arcuate shape; and
   a receiver module arranged to receive a user input in respect of a first user interface element in the first set and wherein the display module is arranged to display a second set of interactive user interface elements each associated with a second set of the characteristics and the characteristic of the first user interface element, in response to the user input in respect of the first user interface element.
2. The system of embodiment 1 wherein the first set of interactive user interface elements are spaced along the first arcuate shape.
3. The system of embodiment 1 or embodiment 2 wherein each user interface element of the first set is positioned adjacent another user interface element of the first set.
4. The system of any one of the preceding embodiments wherein the first arcuate shape is at least partially a ring.
5. The system of any one of the preceding embodiments wherein the first arcuate shape is an unclosed ring comprising a gap.
6. The system of embodiment 5 wherein the gap is at least one quarter of the length of the circumference of the ring.
7. The system of any one of the preceding embodiments wherein the first set of user interface elements are spaced along the first arcuate shape in a single row.
8. The system of any one of the preceding embodiments wherein the second set of interactive user interface elements are displayed in a second arcuate shape.
9. The system of any one of the preceding embodiments wherein the display module is arranged to display the second set of interactive user interface elements and a first breadcrumb element, in response to receiving the user input in respect of the first user interface element.
10. The system of embodiment 9 wherein the first breadcrumb element comprises a third arcuate shape.
11. The system of embodiment 10 wherein the third arcuate shape is arranged within an interior circumference of the second arcuate shape.
12. The system of any one of embodiments 9 to 11 wherein the receiver module is arranged to receive a user input in respect of the first breadcrumb element; and
   the display module is arranged to display the first set of interactive user interface elements, in response to the user input in respect of the first breadcrumb element.
13. The system of embodiment 12 wherein display module is arranged to hide the second set of interactive user interface elements, in response to receiving the user input in respect of the first breadcrumb element.
14. The system of any one of the preceding embodiments wherein the receiver module is arranged to receive a user input in respect of a second user interface element in the second set; and
   the display module is arranged to display a third set of interactive user interface elements each associated with a third set of the characteristics and the characteristic of the second element, in response to the user input in respect of the second user interface element.
15. The system of any one of the preceding embodiments wherein the input data comprises a plurality of classes associated with a plurality of characteristics;
   the element generation module is arranged to generate a plurality of user interface elements each associated with a class;
   the display module is arranged to display the plurality of user interface elements;
   the receiver module is arranged to receive a user input in respect of one of the plurality of user interface elements, to select the class associated with the user interface element; and
   the display module is arranged to generate the first set of interactive user interface elements each associated with the selected class, in response to the user input in respect of one of the plurality of user interface elements.
16. The system of any one of the preceding embodiments further comprising:
   a smartphone or a tablet having a display screen;
   wherein the display module is arranged to display the user interface elements on the display screen.
17. The system of any one of the preceding embodiments wherein the display screen has a diagonal length of less than 12 inches (30.5 cm) or less than 6 inches (15.2 cm).
18. The system of embodiment 16 or embodiment 17 wherein the smartphone or tablet comprises the communication interface, the element generation module, the display module and the receiver module.
19. The system of any one of the preceding embodiments wherein a server comprises the communication interface and the element generation module; and
   a client-side device comprises the display module and the receiver module.
20. A computer-implemented method of generating user interface elements, the method comprising:
   receiving input data comprising at least one class associated with a plurality of characteristics;
   generating a first set of interactive user interface elements, each associated with a characteristic of a first set of the characteristics;
   displaying the first set of interactive user interface elements in a first arcuate shape;
   receiving a user input in respect of a first user interface element in the first set and, in response, displaying a second set of interactive user interface elements each associated with a second set of the characteristics and the characteristic of the first user interface element.
21. The computer-implemented method of embodiment 20 wherein the first set of interactive user interface elements are spaced along the first arcuate shape.
22. The computer-implemented method of embodiment 20 or embodiment 21 wherein each user interface element of the first set is positioned adjacent another user interface element of the fist set.
23. The computer-implemented method of any one embodiments 20 to 22 wherein the first arcuate shape is at least partially a ring.
24. The computer-implemented method of any one of embodiments 20 to 23 wherein the first arcuate shape is an unclosed ring comprising a gap.
25. The computer-implemented method of embodiment 24 wherein the gap is at least one quarter of the length of the circumference of the ring.
26. The computer-implemented method of any one embodiments 20 to 25 wherein the first set of user interface elements are spaced along the first arcuate shape in a single row of user interface elements.
27. The computer-implemented method of any one embodiments 20 to 26 wherein the second set of interactive user interface elements are displayed in a second arcuate shape.
28. The computer-implemented method of any one embodiments 20 to 27 further comprising:
   in response to receiving the user input, displaying the second set of interactive user interface elements and a first breadcrumb element.
29. The computer-implemented method of embodiment 28 wherein the first breadcrumb element comprises a third arcuate shape.
30. The computer-implemented method of embodiment 29 wherein the third arcuate shape is arranged within an interior circumference of the second arcuate shape.
31. The computer-implemented method of any one of embodiments 28 to 30 further comprising:
   receiving a user input in respect of the first breadcrumb element and, in response, displaying the first set of interactive user interface elements.
32. The computer-implemented method of embodiment 31 wherein the second set of interactive user interface elements are hidden in response to receiving the user input in respect of the first breadcrumb element.
33. The computer-implemented method of any one embodiments 20 to 32 further comprising receiving a user input in respect of a second user interface element in the second set and, in response, displaying a third set of interactive user interface elements each associated with a third set of the characteristics and the characteristic of the second user interface element.
34. The computer-implemented method of any one embodiments 20 to 33 further comprising:
   receiving input data comprising a plurality of classes associated with a plurality of characteristics;
   generating a plurality of user interface elements each associated with a class;
   displaying the plurality of user interface elements;
   receiving a user input in respect of one of the plurality of user interface elements, to select the class associated with the user interface element;
   and, in response, generating the first set of interactive user interface elements each associated with the selected class.
35. A computer program comprising code portions which when run a computer cause the computer to carry out the method of any one of embodiments 20 to 34.
36. A computer-readable data carrier having stored thereon the computer program of embodiment 35.

## Claims

1. A system for generating user interface elements, the system comprising:
a communication interface arranged to receive input data comprising at least one class associated with a plurality of characteristics;
an element generation module arranged to generate a first set of interactive user interface elements, each associated with a characteristic of a first set of the characteristics;
a display module arranged to display the first set of interactive user interface elements in a first arcuate shape; and
a receiver module arranged to receive a user input in respect of a first user interface element in the first set and wherein the display module is arranged to display a second set of interactive user interface elements each associated with a second set of the characteristics and the characteristic of the first user interface element, in response to the user input in respect of the first user interface element.

2. The system of claim 1 wherein the first set of interactive user interface elements are spaced along the first arcuate shape.

3. The system of claim 1 or claim 2 wherein each user interface element of the first set is positioned adjacent another user interface element of the first set.

4. The system of any one of the preceding claims wherein the first arcuate shape is at least partially a ring.

5. The system of any one of the preceding claims wherein the first arcuate shape is an unclosed ring comprising a gap, preferably, wherein the gap is at least one quarter of the length of the circumference of the ring.

6. The system of any one of the preceding claims wherein the first set of user interface elements are spaced along the first arcuate shape in a single row.

7. The system of any one of the preceding claims wherein the second set of interactive user interface elements are displayed in a second arcuate shape.

8. The system of any one of the preceding claims wherein the display module is arranged to display the second set of interactive user interface elements and a first breadcrumb element, in response to receiving the user input in respect of the first user interface element, preferably, wherein the first breadcrumb element comprises a third arcuate shape, preferably, wherein the third arcuate shape is arranged within an interior circumference of the second arcuate shape.

9. The system of any one of claims 8 wherein the receiver module is arranged to receive a user input in respect of the first breadcrumb element; and
the display module is arranged to display the first set of interactive user interface elements, in response to the user input in respect of the first breadcrumb element; and/or wherein display module is arranged to hide the second set of interactive user interface elements, in response to receiving the user input in respect of the first breadcrumb element.

10. The system of any one of the preceding claims wherein the receiver module is arranged to receive a user input in respect of a second user interface element in the second set; and
the display module is arranged to display a third set of interactive user interface elements each associated with a third set of the characteristics and the characteristic of the second element, in response to the user input in respect of the second user interface element.

11. The system of any one of the preceding claims wherein the input data comprises a plurality of classes associated with a plurality of characteristics;
the element generation module is arranged to generate a plurality of user interface elements each associated with a class;
the display module is arranged to display the plurality of user interface elements;
the receiver module is arranged to receive a user input in respect of one of the plurality of user interface elements, to select the class associated with the user interface element; and
the display module is arranged to generate the first set of interactive user interface elements each associated with the selected class, in response to the user input in respect of one of the plurality of user interface elements.

12. The system of any one of the preceding claims further comprising:
a smartphone or a tablet having a display screen;
wherein the display module is arranged to display the user interface elements on the display screen, preferably, wherein the display screen has a diagonal length of less than 12 inches (30.5 cm) or less than 6 inches (15.2 cm); and/or
wherein the smartphone or tablet comprises the communication interface, the element generation module, the display module and the receiver module.

13. The system of any one of the preceding claims wherein a server comprises the communication interface and the element generation module; and
a client-side device comprises the display module and the receiver module.

14. A computer-implemented method of generating user interface elements, the method comprising:
receiving input data comprising at least one class associated with a plurality of characteristics;
generating a first set of interactive user interface elements, each associated with a characteristic of a first set of the characteristics;
displaying the first set of interactive user interface elements in a first arcuate shape;
receiving a user input in respect of a first user interface element in the first set and, in response, displaying a second set of interactive user interface elements each associated with a second set of the characteristics and the characteristic of the first user interface element.

15. A computer program comprising code portions which when run a computer cause the computer to carry out the method of claim 14.
